(19) Europäisches Patentamt
European Patent Office
Office européen des brevets

(11) **EP 2 020 313 A2**

(12) **EUROPEAN PATENT APPLICATION**

(43) Date of publication:
**04.02.2009 Bulletin 2009/06**

(51) Int Cl.:
***B60G 17/04*** *(2006.01)*

(21) Application number: **08013266.5**

(22) Date of filing: **23.07.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **03.08.2007 JP 2007203225**

(71) Applicant: **Nissan Motor Co., Ltd.
Kanagawa 221-0023 (JP)**

(72) Inventors:
• **Naoshige, Shimizu
Atsugi-shi
Kanagawa 243-0123 (JP)**
• **Hitoshi, Ono
Atsugi-shi
Kanagawa 243-0123 (JP)**

(74) Representative: **Grünecker, Kinkeldey,
Stockmair & Schwanhäusser
Anwaltssozietät
Leopoldstrasse 4
80802 München (DE)**

(54) **Active suspension and method for controlling vehicle attitude change**

(57)    An active suspension system has a plurality of actuators which are respectively installed between a wheel and a vehicle body and individually produce a control force, and a control unit which controls an attitude change of a vehicle by controlling the each control force of the plurality of actuators. The control unit sets first and second virtual control lines which extend along a front-and-rear direction of the vehicle and a width direction of the vehicle respectively and are changed so that the first and second virtual control lines follow expected pitching and rolling that would occur to the vehicle, and then controls the vehicle attitude so that the vehicle attitude is brought closer to the virtual control line.

# FIG.8

FRONT DIRECTION OF
FRONT-AND-REAR
DIRECTION OF VEHICLE

**Description**

## BACKGROUND OF THE INVENTION

The present invention relates to an active suspension which controls or suppresses a vehicle attitude change by controlling each actuator that is installed between a vehicle body and a wheel and relates to a method for controlling the vehicle attitude change.

In recent years, there have been proposed and developed various active suspensions. One such active suspension has been disclosed in Japanese Patent Provisional Publication No. 7-186666 (hereinafter is referred to as "JP7-186666"). In JP7-186666, the vehicle attitude change is controlled by control forces of four actuators respectively arranged at left and right front wheels and left and right rear wheels by suppressing vibration of one virtual control point that is off-centered from the center of gravity of the vehicle.

## SUMMARY OF THE INVENTION

In JP7-186666, as the virtual control point, only one point off-centered from the center of gravity of the vehicle is set, and a bounce component of this one virtual control point is controlled. That is, an idea of JP7-186666 is to control the vibration of the predetermined one point. However, with regard to other points than the predetermined one point, their vibrations are not taken into account at all. Because of this, in JP7-186666, the vehicle attitude is not changed appropriately according to a vehicle driving condition.

It is therefore an object of the present invention to provide a method for controlling the vehicle attitude change and provide an active suspension system which are capable of changing the vehicle attitude appropriately according to the vehicle driving condition.

According to one aspect of the present invention, an active suspension system comprises: a plurality of actuators which are respectively installed between a wheel and a vehicle body and individually produce a control force; and a control unit which controls an attitude change of a vehicle by controlling the each control force of the actuators, and the control unit sets a virtual control line that is changed according to a vehicle driving condition and controls the vehicle attitude in a direction in which an inclination of the vehicle with respect to the virtual control line becomes small.

According to another aspect of the present invention, a method for suppressing an attitude change of a vehicle, wherein the vehicle includes a plurality of actuators respectively installed between a wheel and a vehicle body and individually producing a control force, the method comprises: setting a virtual control line that is changed according to a vehicle driving condition; and controlling the each control force of the actuators to bring the vehicle attitude closer to the virtual control line.

## BRIEF DESCRIPTION OF THE DRAWINGS

FIG. 1 is a drawing showing a schematic view of an active suspension according to embodiment of the present invention.

FIG. 2 is a drawing of a characteristic line showing a relationship between exciting current and control pressure of a pressure control valve.

FIG. 3 is a drawing of a characteristic line showing a relationship between detected acceleration and output voltage of a longitudinal acceleration sensor.

FIG. 4 is a drawing that explains a relation of position between the longitudinal acceleration sensors.

FIG. 5 is a top view showing positions of a virtual control point and a virtual control line as an example.

FIG. 6 is a block diagram showing an example of a control unit.

FIG. 7 is a block diagram showing an example of a processing unit.

FIG. 8 is a diagrammatic sketch showing positions of two virtual control lines as an example.

FIG. 9 is a drawing that explains a first virtual control line.

FIG. 10 is a drawing that explains a second virtual control line.

FIG. 11 is a drawing that explains a process of change of the first virtual control line.

FIG. 12 is a drawing that explains a process of change of the second virtual control line.

FIG. 13 is a drawing that explains a virtual control point automatic controlling section.

FIG. 14 is a drawing that explains an attitude controlling section.

FIG. 15 is a drawing showing a flow of a process of the control system as an example.

FIG. 16 is a drawing showing another example of the actuator.

## DETAILED DESCRIPTION OF THE INVENTION

In the present invention, a plurality of actuators are installed between respective wheels and a vehicle body, and by controlling control forces of the plurality of actuators, an attitude change of the vehicle is controlled. More specifically, when controlling the attitude change, a virtual control line is variably set to a suitable position according to a vehicle driving condition, then the control is executed to bring the vehicle attitude closer to the virtual control line.

In the present invention, a target that should be suppressed or controlled is changed from a point to a line (the virtual control line), and the virtual control line is variably set or changed in accordance with the vehicle driving condition, and then the vehicle attitude is controlled so that the vehicle attitude is brought closer to the virtual control line. As a result, vehicle behavior can be suppressed or controlled toward the virtual control line, and also the vehicle attitude can be appropriately changed in accordance with the change of the virtual control line.

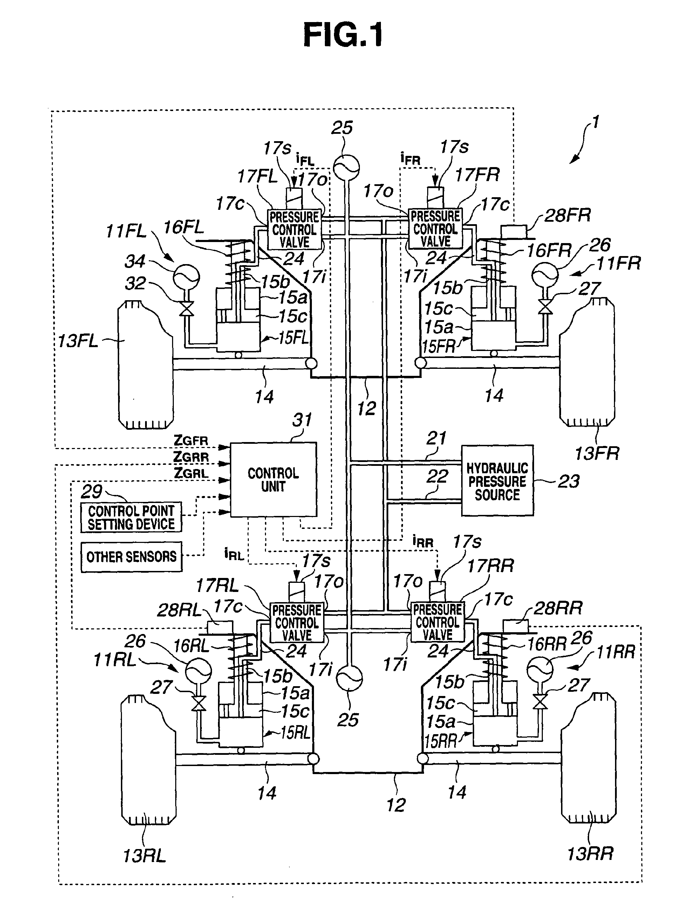

Now, embodiments of the present invention will be explained below with reference to the drawings. The embodiment is applied to an active suspension of a vehicle 1 that has four wheels; left and right front wheels and left and right rear wheels. Fig. 1 is a schematic view showing a structure of the active suspension apparatus or system of the embodiment.

(Structure)

First, the structure will be explained. As shown in Fig. 1, suspension devices or apparatuses 11FL ~ 11RR (11FL, 11FR, 11RL and 11RR) are respectively installed between vehicle side members 12 and wheel side members 14 that hold respective wheels 13FL ~ 13RR (13FL, 13FR, 13RL and 13RR). The suspension devices 11FL ~ 11RR have hydraulic cylinders 15FL ~ 15RR (15FL, 15FR, 15RL and 15RR) as actuators, coil springs 16FL ~ 16RR (16FL, 16FR, 16RL and 16RR), and pressure control valves 17FL ~ 17RR (17FL, 17FR, 17RL and 17RR), respectively. The hydraulic cylinders 15FL ~ 15RR are installed with their axes being in an up-and-down direction. The coil springs 16FL ~ 16RR are arranged parallel to the hydraulic cylinders 15FL ~ 15RR respectively. Each of the pressure control valves 17FL ~ 17RR controls an actuating hydraulic pressure for the hydraulic cylinders 15FL ~ 15RR according to a command value from a control unit 31 (described later).

With regard to each of the hydraulic cylinders 15FL ~ 15RR, a lower portion of its cylinder tube 15a is attached to the wheel side member 14, and an upper end portion of its piston rod 15b is attached to the vehicle side member 12. Further, a piston 15c fixed to a bottom of the piston rod 15b separates an inside of the cylinder tube 15a into upper and lower pressure chambers. Then by a difference of pressure which a unit area of the piston 15c receives between these two pressure chambers defined by the piston 15c, thrust according to the actuating hydraulic pressure supplied from the pressure control valves 17FL ~ 17RR is produced.

With respect to each of the coil springs 16FL ~ 16RR, it is the one that holds a static or dead load of the vehicle 1, and a spring constant of the coil spring could have a low spring constant for only holding the static load.

As for the pressure control valves 17FL ~ 17RR, each of them has an input port 17i, a return port 17o, and a control pressure port 17c. Further, each pressure control valve 17FL ~ 17RR has a spool that switches between a shut-off state in which the control pressure port 17c is shut off from the input port 17i or the return port 17o and a communication state in which the control pressure port 17c is connected to the input port 17i or the return port 17o. In addition, a supply pressure and a control pressure are supplied to both ends of the spool as a pilot pressure, and a poppet valve controlled by a proportional solenoid 17s on the supply pressure side is provided in each of the pressure control valves 17FL ~ 17RR. Each pressure $P_C$ of the control pressure port 17c is then controlled to a pressure corresponding to respective exciting currents $I_{FL} \sim I_{RR}$ sent from the after mentioned control unit 31 to the proportional solenoid 17s.

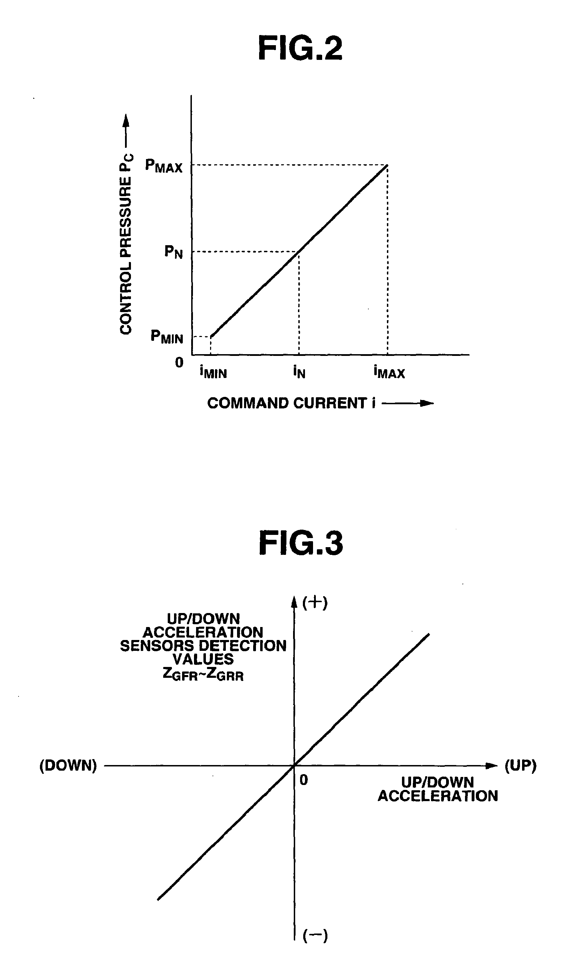

Here, a relationship between the exciting currents $I_{FL} \sim I_{RR}$ and the control hydraulic pressure $P_C$ output from the control pressure port 17c is shown in Fig. 2. When the exciting currents $I_{FL} \sim I_{RR}$ are close to 0 (zero), $P_{MIN}$ is output. As the exciting currents $I_{FL} \sim I_{RR}$ increase in a positive direction from this state, the control hydraulic pressure $P_C$ is increased with a proportional gain K1, and then the control hydraulic pressure $P_C$ becomes saturated to a set line pressure $P_H$ of a hydraulic pressure source 23 (described later).

The input port 17i and the return port 17o of the pressure control valves 17FL ~ 17RR are connected to the hydraulic pressure source 23 respectively through a supply side pipe or line 21 and a return side pipe or line.22. Further, the control pressure port 17c connected to the input port 17i and the return port 17o is connected to the pressure chamber of the respective hydraulic cylinders 15FL ~ 15RR through a hydraulic pipe 24. Here, in Fig. 1, reference sign 25 is a high pressure side accumulator that is provided on the supply side line 21. Reference sign 26 is an unsprung vibration absorbing accumulator that communicates with the pressure chamber of the respective hydraulic cylinders 15FL ~ 15RR through a throttle 27.

On the other hand, at three positions corresponding to the front right wheel 13FR, the rear left wheel 13RL and the rear right wheel 13RR in the vehicle 1, longitudinal (or up-and-down) acceleration sensors 28FR, 28RL and 28RR are respectively provided as a longitudinal acceleration detecting device or means. These longitudinal acceleration sensors 28FR ~ 28RR respectively output acceleration detected values $Z_{GFR}$ ~ $Z_{GRR}$, which are signals corresponding to detected longitudinal acceleration, to the control unit 31.

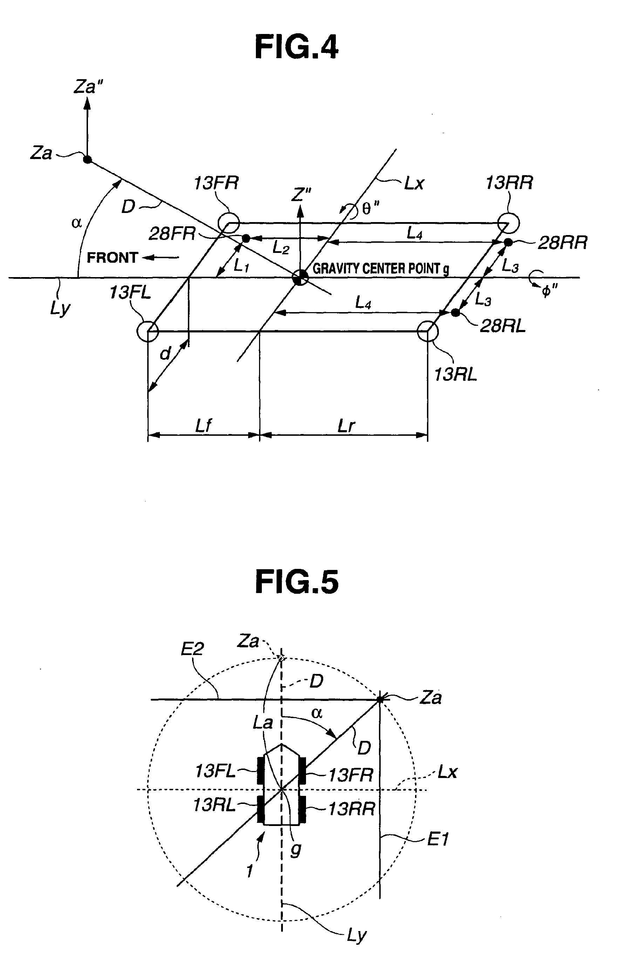

More specifically, the longitudinal acceleration sensors 28FR ~ 28RR output the acceleration detected values $Z_{GFR}$ ~ $Z_{GRR}$ as shown in Fig. 3. When the acceleration is 0 (zero), the longitudinal acceleration sensors 28FR ~ 28RR output a voltage of zero. When upward acceleration occurs, the corresponding acceleration detected values $Z_G$ which is a positive voltage is output. When downward acceleration occurs, the corresponding acceleration detected values $Z_G$ which is a negative voltage is output. Then by arranging the three longitudinal acceleration sensors 28FR ~ 28RR at the respective positions corresponding to the positions of the wheels 13FR ~ 13RR as shown in Fig. 4, when bounce acceleration Z", roll angle acceleration Φ" and pitch angle acceleration θ" occur to the vehicle 1, the acceleration detected values $Z_{GFR}$ ~ $Z_{GRR}$ which are represented by the following expressions (1) ~ (3) are respectively output from the longitudinal acceleration sensors 28FR ~ 28RR.

$$Z_{GFR} = Z'' - L2\, \theta'' - L1\, \varphi'' \qquad \cdots (1)$$

$$Z_{GRL} = Z'' + L4\, \theta'' + L3\, \varphi'' \qquad \cdots (2)$$

$$Z_{GRR} = Z'' + L4\, \theta'' - L3\, \varphi'' \qquad \cdots (3)$$

In the expressions (1) ~ (3), $L_1$ is a distance in a right-and-left direction between a front-and-rear direction line passing through a point of the center of gravity (gravity center point "g") of the vehicle 1 and the front right longitudinal acceleration sensor 28FR. $L_2$ is a distance in a front-and-rear direction between a right-and-left direction line passing through the gravity center point "g" of the vehicle 1 and the front right longitudinal acceleration sensor 28FR. $L_3$ is a distance in the right-and-left direction between the front-and-rear direction line passing through the gravity center point "g" of the vehicle 1 and the rear left or rear right longitudinal acceleration sensor 28RL or 28RR. $L_4$ is a distance in the front-and-rear direction between the right-and-left direction line passing through the gravity center point "g" of the vehicle 1 and the rear left or rear right longitudinal acceleration sensor 28RL or 28RR.

Here, as shown in Figs. 4 and 5, viewed from the top, a different position from the vehicle gravity center point "g" is set as a virtual control point Za. Figs. 4 and 5 show a case where the virtual control point Za is positioned outside the vehicle, when viewed from the top. However, the virtual control point Za could be positioned at the position of the vehicle gravity center point "g". That is, when viewed from the top, as an initial position of the virtual control point Za, the virtual control point Za could be positioned at the position of the vehicle gravity center point "g" or could be positioned at a front side of the vehicle in the front-and-rear direction outside the vehicle apart from the gravity center point "g" as shown in Figs. 4 and 5. The setting position of this virtual control point Za can be changed by a control point setting device 29 that is installed close to a driver's seat. Positioning information of this virtual control point Za is set, for example, by a polar coordinate (La, α) defined by a distance La from the vehicle gravity center point "g" and an inclination or gradient α with respect to a vehicle front-and-rear axis Ly passing through the vehicle gravity center point "g" when viewed from the top. When the position of the virtual control point Za is the position of the gravity center point "g", the polar coordinate is set to (0, 0).

The above three acceleration detected values $Z_{GFR}$ ~ $Z_{GRR}$ from the longitudinal acceleration sensors 28FR ~ 28RR and the positioning information of the virtual control point Za are input to the control unit 31.

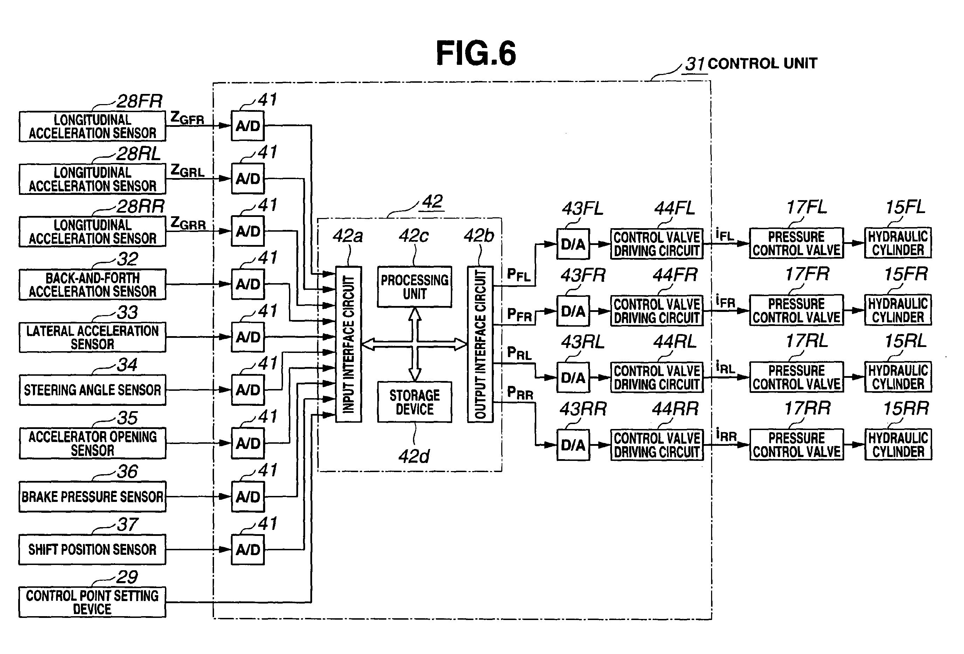

The control unit 31 has, as shown in Fig. 6, a micro computer 42, D/A converters 43FL ~ 43RR (43FL, 43FR, 43RL and 43RR) and control valve driving circuits 44FL ~ 44RR (44FL, 44FR, 44RL and 44RR). The micro computer 42 outputs pressure command values $P_{FL}$ ~ $P_{RR}$ to the D/A converters 43FL ~ 43RR, and the pressure command values $P_{FL}$ ~ $P_{RR}$ are D/A converted. Then D/A converted analog voltages $V_{FL}$ ~ $V_{RR}$ is respectively input to the control valve driving circuits 44FL ~ 44RR.

The micro computer 42 has, at least, an input interface circuit 42a, an output interface circuit 42b, a processing unit or section 42c and a storage device or section 42d. As can be seen in Fig. 6, the following information signals; the acceleration detected values $Z_{GFR}$ ~ $Z_{GRR}$ from the three longitudinal acceleration sensors 28FR ~ 28RR, a back-and-forth acceleration detected value of the vehicle from a back-and-forth acceleration sensor 32, a lateral acceleration detected value of the vehicle from a lateral acceleration sensor 33, a steering angle detected value which a driver operates, from a steering angle sensor 34, an accelerator opening detected value from an accelerator opening sensor 35, a brake pressure detected value from a brake pressure sensor 36, and a shift position detected value from a shift position sensor 37, are input to the input interface circuit 42a through respective A/D converters 41. Further, the positioning information of the virtual control point Za is directly input from the control point setting device 29 to the input interface circuit 42a. Then, as mentioned above, the pressure command values $P_{FL} \sim P_{RR}$ output from the output interface circuit 42b are converted to the analog voltages $V_{FL} \sim V_{RR}$ by the D/A converters 43FL ~ 43RR, and are sent to the control valve driving circuits 44FL ~ 44RR.

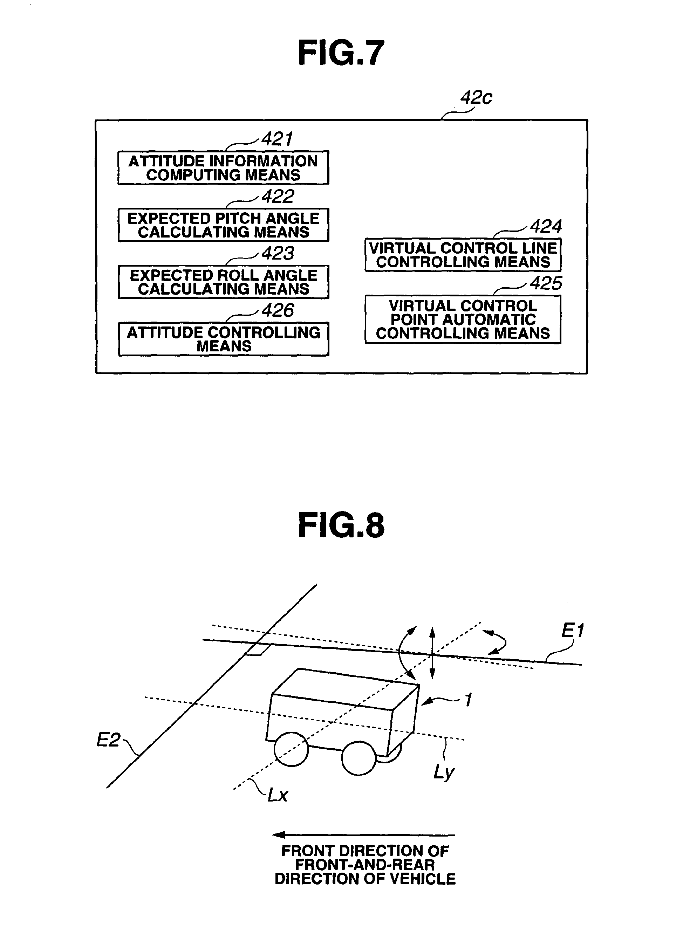

The processing section 42c has, as shown in Fig. 7, an attitude information computing section or means 421, an expected or estimated pitch angle calculating section or means 422, an expected or estimated roll angle calculating section or means 423, a virtual control line controlling section or means 424, a virtual control point automatic controlling section or means 425, and an attitude controlling section or means 426.

The attitude information computing section 421 reads the up/down acceleration detected values $Z_{GFR} \sim Z_{GRR}$ of the longitudinal acceleration sensors 28FR ~ 28RR through the input interface circuit 42a. Then, on the basis of the three up/down acceleration detected values $Z_{GFR} \sim Z_{GRR}$, the following expressions (4) ~ (6) are computed, and the bounce acceleration Z", the pitch angle acceleration θ" and the roll angle acceleration Φ" at the position of the gravity center point "g" are calculated.

Further, an up/down acceleration Za" at the virtual control point Za is calculated on the basis of the following expression (7). Here, if the virtual control point Za is the position Za of the gravity center point "g", viewed from the top, the expression becomes Za" = Z". Further, by performing computation in a known manner such as integrating filter operation, the pitch angle acceleration θ", the roll angle acceleration Φ" and the up/down acceleration Za" are respectively converted to a pitch angle velocity, a roll angle velocity and an up/down velocity, and further converted to a pitch angle θp, a roll angle θr and an up/down displacement amount ΔZ.

$$Z'' = \frac{L_4}{L_2 + L_4} Z_{GFR} + \frac{L_2 L_3 - L_4 L_1}{2 L_3 (L_2 + L_4)} Z_{GRR} + \frac{L_2 L_3 + L_4 L_1}{2 L_3 (L_2 + L_4)} Z_{GRL} \qquad \cdots (4)$$

$$\theta'' = \frac{-1}{L_2 + L_4} Z_{GFR} + \frac{L_1 + L_3}{2 L_3 (L_2 + L_4)} Z_{GRR} + \frac{-L_1 + L_3}{2 L_3 (L_2 + L_4)} Z_{GRL} \qquad \cdots (5)$$

$$\varphi'' = (Z_{GRL} - Z_{GRR}) / 2 L_3 \qquad \cdots (6)$$

$$Za'' = Z'' + La \cdot \sin\alpha \cdot \theta'' + La \cdot \cos\alpha \cdot \varphi'' \qquad \cdots (7)$$

The expected pitch angle calculating section 422 calculates an expected pitch angle Vθp of the pitching that would occur to a vehicle body (the vehicle 1) in accordance with a vehicle driving condition. This calculation of the expected pitch angle Vθp is performed, for instance, by the next operation.

First, as signals for calculation of the expected pitch angle, signals of the back-and-forth acceleration, the accelerator opening, the brake pressure and the shift position are input.

Second, an estimation back-and-forth acceleration is calculated based on the accelerator opening, the brake pressure and the shift position which are operating amounts according to the driver's operation and affect the pitching, with reference to a previously stored map formed by experiments and simulations etc.. In this embodiment, the estimation back-and-forth acceleration is calculated based on the above three operating amounts. However, the estimation back-and-forth acceleration could be calculated using one or two of these three operating amounts. Or the estimation back-and-forth acceleration may be calculated based on other operating amounts which affect the pitching and/or amounts varying according to these operating amounts.

Here in the micro computer 42, a feedback function section that corrects the map is provided. Then, when it is judged that the calculated estimation back-and-forth acceleration and the back-and-forth acceleration detected by the back-and-forth acceleration sensor 32 are significantly different, the map is renewed or updated on the basis of a deviation amount between the estimation back-and-forth acceleration and the detected back-and-forth acceleration. After that, the above calculating operation is performed again, and a new estimation back-and-forth acceleration is obtained.

Finally, using the value of the calculated estimation back-and-forth acceleration, the expected pitch angle Vθp is calculated according to an existing equation of motion.

The expected roll angle calculating section 423 calculates an expected roll angle Vθr of the rolling that would occur to the vehicle body (the vehicle 1) in accordance with the vehicle driving condition. This calculation of the expected roll angle Vθr is performed, for instance, by the next operation.

First, as signals for calculation of the expected roll angle, signals of the steering angle and the lateral acceleration are input.

Second, an estimation lateral acceleration is calculated based on the steering angle which is the operating amount according to the driver's operation and affects the rolling and a steering angle velocity obtained by differentiation of the steering angle, with reference to a previously stored map formed by experiments and simulations etc.. Here, the estimation lateral acceleration could be calculated based on other operating amounts which affect the rolling and/or amounts varying according to these operating amounts.

Here in the micro computer 42, a feedback function section that corrects the map is provided. Then, when it is judged that the calculated estimation lateral acceleration and the lateral acceleration detected by the lateral acceleration sensor 33 are significantly different, the map is renewed or updated on the basis of a deviation amount between the estimation lateral acceleration and the detected lateral acceleration. After that, the above calculating operation is performed again, and a new estimation lateral acceleration is obtained.

Finally, using the value of the calculated estimation lateral acceleration, the expected roll angle Vθr is calculated according to an existing equation of motion.

Next, the virtual control line controlling section 424 will be explained. In this embodiment, as the virtual control line, as shown in Fig. 8, two virtual control lines E1 and E2; a first virtual control line E1 that extends along the front-and-rear direction of the vehicle, and a second virtual control line E2 that extends along a vehicle width direction, are set, and the control is then executed. Here, the first virtual control line E1 is used mainly for the control of the attitude in a pitching direction of the vehicle 1. On the other hand, the second virtual control line E2 is used mainly for the control of the attitude in a rolling direction of the vehicle 1.

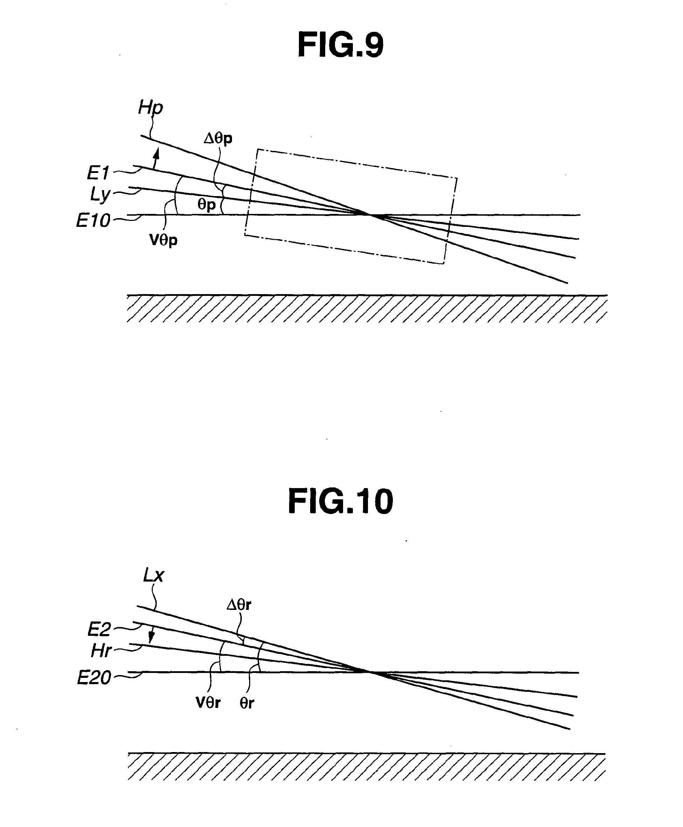

With regard to the first virtual control line E1, as shown in 9, a line extending in a direction parallel to a road surface, viewed from the vehicle width direction, is set as a base or reference virtual control line position E10. On the other hand, as for the second virtual control line E2, as shown in Fig. 10, a line extending in a direction parallel to a road surface, viewed from the vehicle front-and-rear direction, is set as a base or reference virtual control line position E20. However, these reference virtual control line positions E10 and E20 could be changed in accordance with the vehicle driving condition such as a vehicle speed.

In a state in which the vehicle stops and then the vehicle speed is 0 (zero), the first and second virtual control lines E1 and E2 are respectively set to the reference virtual control lines E10 and E20.

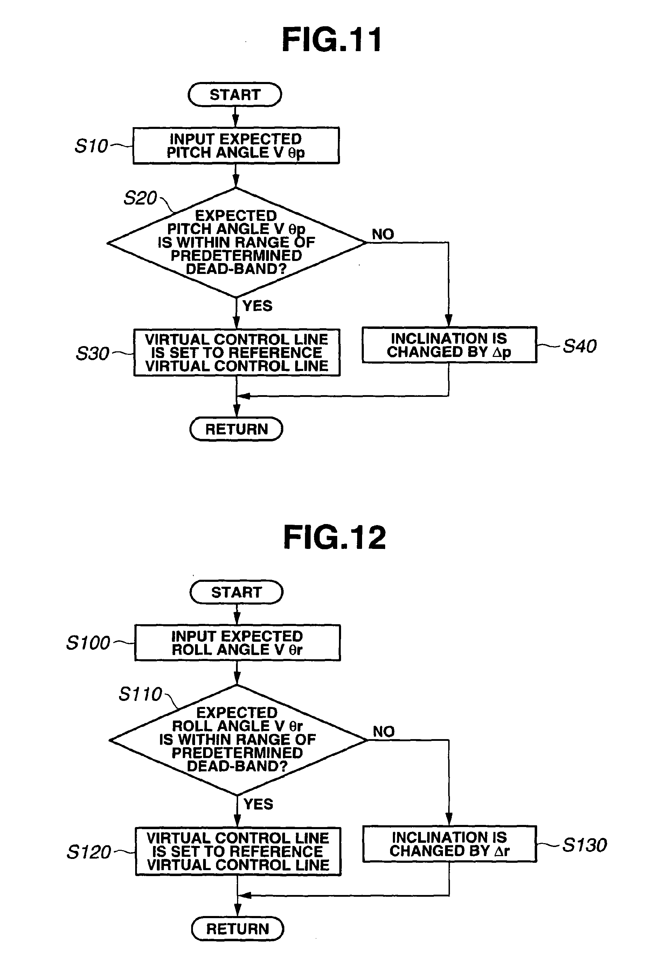

Regarding the first virtual control line E1, its change process will be explained with reference to Fig. 11. This process is operated at a predetermined sampling cycle or interval.

First, at step S10, the virtual control line controlling section 424 gets the expected pitch angle Vθp calculated by the expected pitch angle calculating section 422.

At step S20, a judgment is made as to whether or not the expected pitch angle Vθp is within a range of a predetermined dead-band or dead-zone. If an absolute value of the expected pitch angle Vθp is within the range of the dead-band, the routine proceed to step S30, and the first virtual control line E1 is set to the reference virtual control line E10. Here, if the absolute value of the expected pitch angle Vθp is within the range of the dead-band, the first virtual control line E1 could be fixed to the last set position.

On the other hand, if the expected pitch angle Vθp is beyond the range of the dead-band, the routine proceeds to step S40, and as shown is Fig. 9, an inclination of the first virtual control line E1, viewed from the vehicle width direction, is changed by a predetermined pitch change angle Δp toward a direction approaching the expected pitch angle Vθp. In Fig. 9, a reference sign Hp is an axis line of the expected pitch angle Vθp. In this way, when the inclination is changed by the pitch change angle Δp at the sampling cycle, the first virtual control line E1 moves with a constant velocity or speed toward the expected pitch angle Vθp. Here, the pitch change angle Δp is not necessarily constant, it could be changed in accordance with the vehicle speed or the preset map.

Next, regarding the second virtual control line E2, its change process will be explained with reference to Fig. 12. This process is operated at the predetermined sampling cycle.

First, at step S100, the virtual control line controlling section 424 gets the expected roll angle Vθr calculated by the expected roll angle calculating section 423.

At step S110, a judgment is made as to whether or not the expected roll angle Vθr is within a range of a predetermined dead-band or dead-zone. If an absolute value of the expected roll angle Vθr is within the range of the dead-band, the routine proceeds to step S120, and the second virtual control line E2 is set to the reference virtual control line E20. Here, if the absolute value of the expected roll angle Vθr is within the range of the dead-band, the second virtual control line E2 could be fixed to the last set position.

On the other hand, if the expected roll angle Vθr is beyond the range of the dead-band, the routine proceeds to step S130, and as shown is Fig. 10, an inclination of the second virtual control line E2, viewed from the vehicle front-and-rear direction, is changed by a predetermined roll change angle $\Delta r$ toward a direction approaching the expected roll angle $V\theta r$. In Fig. 10, a reference sign Hr is an axis line of the expected roll angle $V\theta r$. In this way, when the inclination is changed by the roll change angle $\Delta r$ at the sampling cycle, the second virtual control line E2 moves with a constant velocity or speed toward the expected roll angle $V\theta r$. Here, the roll change angle $\Delta r$ is not necessarily constant, it could be changed in accordance with the vehicle speed or the preset map.

Next, with regard to the virtual control point automatic controlling section 425, it will be explained. The virtual control point automatic controlling section 425 performs when the vehicle speed is judged to be 0 (zero), namely that when the vehicle stop is judged, and automatically sets the position (La, $\alpha$) of the virtual control point Za in accordance with seat positions of occupants and/or a carrying load. In this example, the virtual control point Za is set to a position that overlaps with the vehicle 1, viewed from the top.

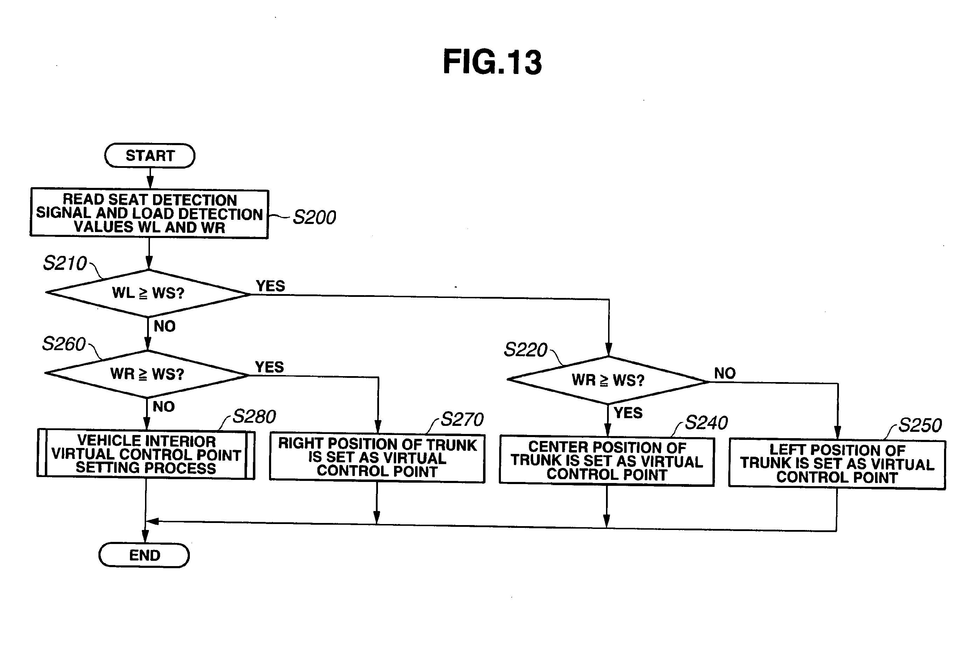

For example, as shown in Fig. 13, besides the longitudinal acceleration sensors 28FR ~ 28RR, each seat sensor, which is formed by a pressure-sensing element or switch etc. that detects a seated occupant, is installed in a sitting position of the respective seats except the driver's seat. In addition, trunk load sensors, such as load cell, which detects a load such as a luggage in a trunk are installed at left and right positions on a bottom surface of the trunk. Then, during the vehicle stop, on the basis of seat detection signals of the seat sensors and load detection values WL and WR of the trunk load sensors, as shown in Fig. 13, a setting process of the virtual control point Za is executed.

In the setting process of the virtual control point Za, first, at step S200, the virtual control point automatic controlling section 425 reads the seat detection signal of the seat sensor and the load detection values WL and WR of the trunk load sensors.

At step S210, a judgment is made as to whether or not the load detection value WL on the left hand side in the trunk is greater than or equal to a predetermined load set value WS. If WL $\geqq$ WS, the load on the left hand side in the trunk is great, and the luggage is required to be protected from up-and-down movement of the vehicle, and the routine proceeds to step S220.

At step S220, a judgment is made as to whether or not the load detection value WR on the right hand side in the trunk is greater than or equal to the load set value WS. If WR $\geqq$ WS, it is judged that the heavy loads (such as heavy luggage) are loaded on the both left and right hand sides in the trunk, and the routine proceeds to step S240.

At step S240, a center position of the trunk is set as the virtual control point Za, and this process is terminated.

Returning to step S220, if WR < WS, it is judged that the heavy load is loaded only on the left hand side in the trunk, and the routine proceeds to step S250. Then, at step S250, a left position of the trunk is set as the virtual control point Za, and this process is terminated.

On the other hand, at step S210, if WL < WS, the routine proceeds to step S260. At step S260, a judgment is made as to whether or not the load detection value WR on the right hand side in the trunk is greater than or equal to the load set value WS. If WR $\geqq$ WS, it is judged that the heavy load is loaded only on the right hand side in the trunk, and the routine proceeds to step S270. Then, at step S270, a right position of the trunk is set as the virtual control point Za, and this process is terminated.

Returning to step S260, if WR < WS, it is judged that no heavy load is loaded in the trunk, and the routine proceeds to step S280.

At step S280, a judgment is made as to whether or not the occupant is seated on the each seat based on the seat detection signals of the respective seats. If only driver is seated on the driver's seat, a position of the driver's seat is set as the virtual control point Za. If only the driver and the occupant are seated on the driver's seat and a passenger seat next to the driver's seat respectively, a middle point between front left and front right seats is set as the virtual control point Za. If only the driver is seated on the driver's seat and the occupant is seated behind the driver, a middle point between front and rear seats on the right hand side is set as the virtual control point Za. If driver and the occupants are seated on the driver's seat and the passenger seat next to the driver's seat and the rear right or rear left seat respectively (if the occupants are seated on the front left and front right seats and rear right or rear left seat), a middle point between these seats is set as the virtual control point Za. If the driver and the occupants are seated on the driver's seat and the passenger seat next to the driver's seat and the rear right and rear left seats respectively (if the occupants are seated on all the seats) or if the driver and the occupant are seated on the driver's seat and the rear left seat respectively, a middle point between the front and rear seats and also between the right and left seats is set as the virtual control point Za. This process is then terminated.

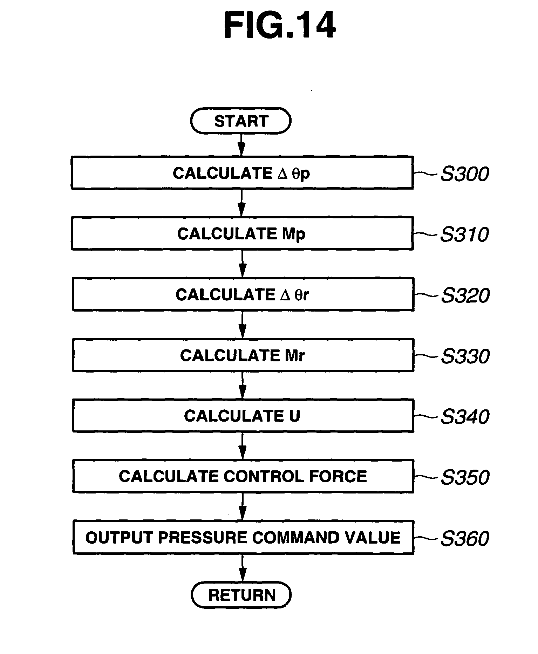

Next, a process in the attitude controlling section 426 will be explained with reference to Fig. 14. First, at step S300, by the following expression, as shown in Fig. 9, a difference $\Delta\theta p$ in the pitch direction between the pitch angle $\theta p$ which is calculated by the attitude information computing section 421 and occurs to the vehicle 1 about the gravity center point "g" and the inclination $V\theta p$ in the pitch direction (up-and-down direction, viewed from the vehicle width direction) of the first virtual control line E1, is calculated. Here, in Fig. 9, for the sake of easy understanding, all the lines are illustrated so that they cross one another at the gravity center point "g" of the vehicle. However, they are not necessarily required to cross one another at one point.

$$\Delta\theta p = V\theta p - \theta p$$

Next, at step S310, by the following expression, a pitch control force Mp is calculated.

$$Mp = Kp \bullet \Delta\theta p$$

Here, Kp is a preset gain.

At step S320, by the following expression, as shown in Fig. 10, a difference $\Delta\theta r$ in the roll direction between the roll angle $\theta r$ which is calculated by the attitude information computing section 421 and occurs to the vehicle 1 about the gravity center point "g" and the inclination $V\theta r$ in the roll direction (up-and-down direction, viewed from the vehicle front-and-rear direction) of the second virtual control line E2, is calculated. Here, in Fig. 10, for the sake of easy understanding, all the lines are illustrated so that they cross one another at the gravity center point "g" of the vehicle. However, they are not necessarily required to cross one another at one point.

$$\Delta\theta r = V\theta r - \theta r$$

Next, at step S330, by the following expression, a roll control force Mr is calculated.

$$Mr = Kr \bullet \Delta\theta r$$

Here, Kr is a preset gain.

Next, at step S340, by the following expression, a bounce control force U is calculated on the basis of the up/down displacement amount $\Delta Z$ at the virtual control point Za from the reference position, calculated by the attitude information computing section 421.

$$U = Kz \bullet \Delta Z$$

Here, Kz is a preset gain.
Or, on the basis of a bounce velocity at the virtual control point Za, the bounce control force U can be calculated by the following expression.

$$U = Kx \bullet Z0'$$

Next, at step S350, by using the above calculated pitch control force Mp, roll control force Mr and bounce control force U, by the following expression (8), control forces $F_{FL} \sim F_{RR}$ which are distributed to the respective wheels 13FL $\sim$ 13RR and produced at the respective hydraulic cylinders 15FL $\sim$ 15RR of the suspension devices 11FL $\sim$ 11RR corresponding to the wheels 13FL $\sim$ 13RR, are computed.

$$\begin{bmatrix} F_{FL} \\ F_{FR} \\ F_{RL} \\ F_{RR} \end{bmatrix} = \begin{bmatrix} \dfrac{L_R}{2(L_F+L_R)} & -\dfrac{L}{2(L_F+L_R)} & \dfrac{1}{4T_F} \\[2ex] \dfrac{L_R}{2(L_F+L_R)} & -\dfrac{L}{2(L_F+L_R)} & -\dfrac{1}{4T_F} \\[2ex] \dfrac{L_F}{2(L_F+L_R)} & \dfrac{L}{2(L_F+L_R)} & \dfrac{1}{4T_R} \\[2ex] \dfrac{L_F}{2(L_F+L_R)} & \dfrac{L}{2(L_F+L_R)} & \dfrac{1}{4T_R} \end{bmatrix} \begin{bmatrix} U \\ M_P \\ M_r \end{bmatrix} \quad \cdots (8)$$

Here,

$L_F$ is a distance from the gravity center point "g" to the front wheel, viewed from the vehicle width direction.
$L_R$ is a distance from the gravity center point "g" to the rear wheel, viewed from the vehicle width direction.
$T_F$ is a distance from the gravity center point "g" to the front right wheel, viewed from the vehicle front direction.
$T_R$ is a distance from the gravity center point "g" to the rear right wheel, viewed from the vehicle front direction.

Next, at step S360, the pressure command values $P_{FL} \sim P_{RR}$ for the pressure control valves 17FL $\sim$ 17RR corresponding to the wheels 13FL $\sim$ 13RR are calculated according to the control forces $F_{FL} \sim F_{RR}$. These pressure command values $P_{FL} \sim P_{RR}$ are then output to the D/A converters 43FL $\sim$ 43RR through the output interface circuit 42b.

Here, the storage section 42d is configured by ROM and RAM etc., and previously stores programs needed for the computation of the processing section 42c, and also continually stores computation results of the processing section 42c. Further, each of the control valve driving circuits 44FL $\sim$ 44RR is formed by, for example, a floating type constant-current circuit, and provides the proportional solenoid 17s of the respective pressure control valves 17FL $\sim$ 17RR with the exciting currents $I_{FL} \sim I_{RR}$ corresponding to the analog voltages $V_{FL} \sim V_{RR}$ which are D/A converted from the input pressure command values $P_{FL} \sim P_{RR}$.

In this embodiment, the change process (Fig. 11) of the first virtual control line E1, executed by the virtual control line controlling section 424, corresponds to a first virtual control line change means. The change process (Fig. 12) of the second virtual control line E2, executed by the virtual control line controlling section 424, corresponds to a second virtual control line change means. Further, the expected pitch angle Vθp and its axis Hp (Fig. 9) and the expected roll angle Vθr and its axis Hr (Fig. 10) are indexes that indicate an expected vehicle attitude.

(Operation)

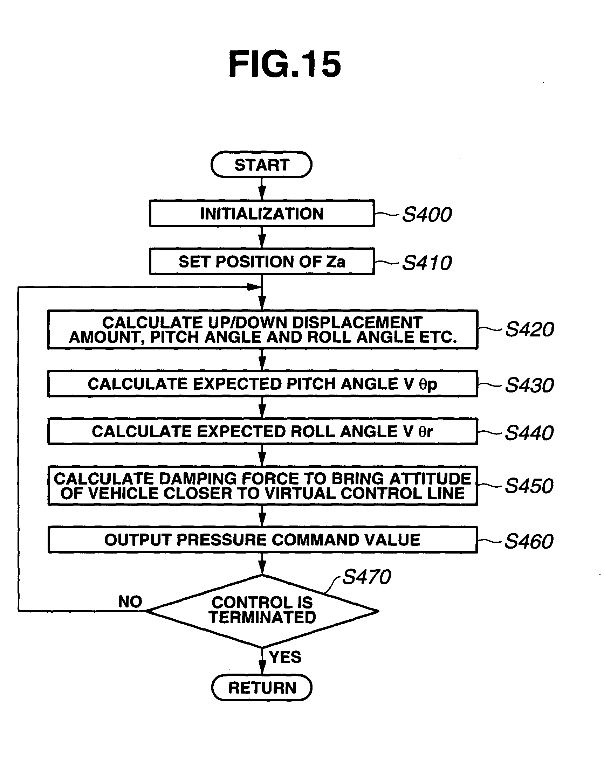

Next, the operation of the above embodiment will be explained with reference to a flow chart in Fig. 15 that shows a procedure of the process executed by the processing section 42c.

First, when an ignition switch is put in an ON-state, power is turned on to the control unit 31, and the processing section 42c initiates the process of the attitude change control of the vehicle 1. That is, at step S400, initialization is done first, and a predetermined vehicle height adjustment is carried out based on a stroke detected value of a stroke sensor (not shown) that is provided at the each wheel, and also each parameter setting needed for the control is done.

At step S410, during the vehicle stop, the virtual control point automatic controlling section 425 operates, and automatically sets the position of the virtual control point Za in the vehicle 1 in accordance with the seat positions of occupants and/or the carrying load.

At step S420, the attitude information computing section 421 calculates the bounce up/down displacement amount, the pitch angle and the roll angle etc. at the gravity center point "g" of the vehicle on the basis of the signals from the longitudinal acceleration sensors 28FR $\sim$ 28RR.

At step S430, the expected pitch angle Vθp is calculated in accordance with the driver's operation. Subsequently, at step S440, the expected roll angle Vθr is calculated in accordance with the driver's operation.

At step S450, in order to bring the attitude of the vehicle 1 closer to the first and second virtual control lines E1, E2 changed by the virtual control line controlling section 424, the control forces produced at the respective suspension devices 11FL $\sim$ 11RR, i.e. the control forces $F_{FL} \sim F_{RR}$ which the hydraulic cylinders 15FL $\sim$ 15RR should produce, are calculated.

Next, at step S460, the pressure command values $P_{FL} \sim P_{RR}$ corresponding to the control forces $F_{FL} \sim F_{RR}$ are calculated, for instance, with reference to a pressure command value calculation map that is pre-stored in the storage section 42d. And then, the calculated pressure command values $P_{FL} \sim P_{RR}$ are output to the D/A converters 43FL $\sim$ 43RR through the output interface circuit 42b.

Next, at step S470, a judgment is made as to whether or not a predetermined completion condition of the control is satisfied. If the control completion condition is not satisfied, in a case where the vehicle is traveling, the routine returns to step S420, and the control is continued. In a case where the vehicle stops, the routine returns to step S410. On the other hand, if the control completion condition is satisfied, the control is terminated. Here, the control completion condition is set when a specified time has elapsed after the ignition switch is turned from ON-state to OFF-state, and power-ON state of the control unit 31 is self held after the OFF-state of the ignition switch as well.

Regarding the first and second virtual control lines E1, E2, by the virtual control line controlling section 424, at least in the vehicle traveling state, in the case where the rolling and pitching which would occur are beyond the predetermined dead-band, the inclination in up-and-down direction, of the first virtual control line E1 is changed with the predetermined speed always toward the expected pitch angle V$\theta$p, and also the inclination in up-and-down direction, of the second virtual control line E2 is changed with the predetermined speed always toward the expected roll angle V$\theta$r.

(Effect)

Effects of the present invention will be explained below.

(1) In this embodiment, since the control forces are produced so that the attitude of the vehicle 1 is brought closer to the first and second virtual control lines E1, E2, the attitude change of the vehicle 1 can be suppressed or controlled.
(2) Further, in this embodiment, since the vehicle attitude is controlled to fit or follow the first virtual control line E1, the pitching of the vehicle 1 can be controlled. And since the vehicle attitude is controlled to fit or follow the second virtual control line E2, the rolling of the vehicle 1 can be controlled. That is to say, the vehicle attitude in the pitching direction and the vehicle attitude in the rolling direction are separately or individually controlled.

(3) Here, when trying to suppress or control the vehicle attitude to a certain or steady vehicle attitude, as a matter of fact, the pitching and rolling occur to the vehicle 1. However, in this embodiment, since the first and second virtual control lines E1, E2 are changed with the predetermined speed so that the first and second virtual control lines E1, E2 follow the expected pitching and rolling which would occur, when the vehicle attitude returns from pitching and rolling states to a former state, the vehicle attitude is smoothly changed. Therefore, an awkward feeling of the occupants, caused by the vehicle attitude change, can be lessened and the riding comfort is improved. In the case where the pitching and rolling which would occur are small within the range of the predetermined dead-band at this time, since it is judged that the pitching and rolling which would occur are small and the deviation from a target value is also small, the change process of the virtual control lines are halted, and the virtual control lines are fixed and then the vehicle attitude is controlled to the certain attitude.

(4) Furthermore, in this embodiment, the virtual control point Za that is the position where the up-and-down movement is suppressed is set in the vehicle 1. Therefore, the bounce of the vehicle 1 is suppressed, and the riding comfort is improved. Moreover, by automatically adjusting the virtual control point Za, a position where the suppression of the vibration is required is estimated, an its vibration can be selectively suppressed.

In the present invention, the virtual control point Za could be set outside the vehicle 1, or could be set in a position where the virtual control point Za overlaps with either of the first and second virtual control lines E1, E2.

(Application)

(1) In the above embodiment, the attitude of the vehicle 1 is controlled toward the first and second virtual control lines E1, E2, and also the virtual control lines are moved or shifted with the predetermined speed in the expected pitching and rolling directions, of the vehicle 1, then the attitude of the vehicle 1 is smoothly changed. However, the present invention is not limited to this.

For example, the virtual control lines could be changed in accordance with a vehicle driving mode (that selects the speed or the riding comfort), a road surface condition (a road $\mu$ of a snow-covered road or a condition of bumps and potholes), an assist input from other driving control system, an ITS input, and information affecting the driving condition, such as navigation input.

(2) Further, in the above embodiment, the vehicle attitude change is controlled using two virtual control line; the first virtual control line E1 for the pitching, the second virtual control line E2 for the rolling. However, the present invention is not limited to this.

For example, using only the first virtual control line E1 as a target virtual control line, the vehicle attitude change in the pitching direction is controlled in the above explained way. Then with regard to the vehicle attitude change in the rolling direction, the suppression control could be done so that the roll angle becomes 0 (zero). In this case, the previously described roll control force Mr is, for instance, indicated as follows.

$$Mr = Kr \bullet \theta r$$

Likewise, using only the second virtual control line E2, the attitude control could be done.

In the present invention, the first and second virtual control lines E1, E2 are not necessarily required to cross the gravity center point "g" of the vehicle, viewed from the top.

(3) Furthermore, in the above embodiment, the inclination of the virtual control line is changed in the up-and-down direction, viewed from the vehicle front-and-rear direction or the vehicle width direction. However, the virtual control line could be changed in a lateral direction besides the up-and-down direction in accordance with the vehicle operating condition. For instance, only a line extending in the vehicle width direction is used as the virtual control line, and this virtual control line is inclined in the lateral direction in accordance with a turn of the vehicle, and then the control force could be controlled to bring the vehicle attitude closer to the virtual control line.

(4) Moreover, in the above embodiment, by changing the inclination of the virtual control line, the change of the virtual control line is performed. However, for example, a plurality of the virtual control lines could be set, and some of them, which are used for the control, could be changed successively in accordance with the vehicle traveling condition.

(5) In addition, in accordance with the vehicle driving mode (that selects the speed or the riding comfort), the virtual control point Za and the speed of the movement of the virtual control line could be changed. That is, these setting could be done according to the driver's operation.

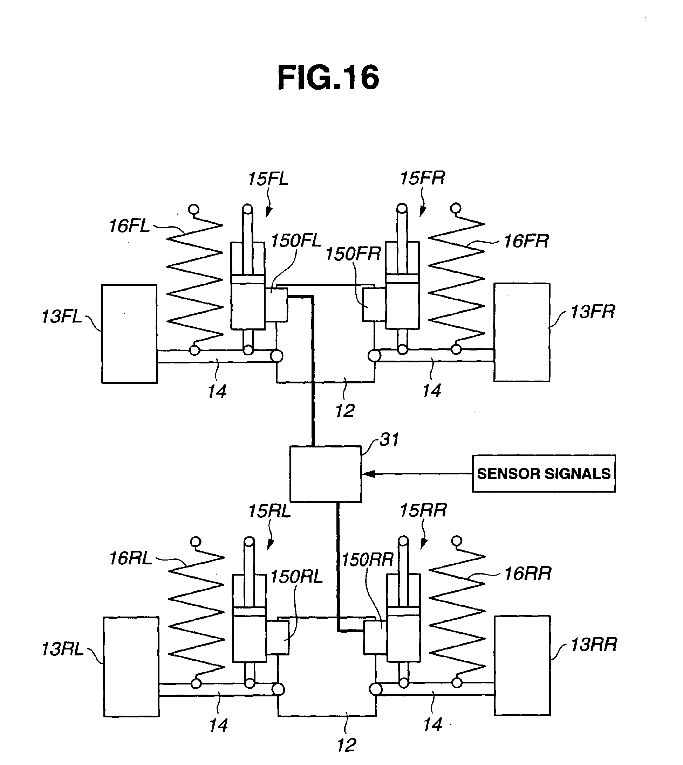

(6) In the above embodiment, as the actuator, an active damper is used, which variably controls the thrust produced at the hydraulic cylinder. However, as shown in Fig. 16, a semi-active damper could be used as the actuator, which controls a damping force of each of the hydraulic cylinders 15FL ~ 15RR by controlling respective damping force variable valves 150FL ~ 150RR. Then by using the variably controlled damping force as the above described control force, the vehicle attitude could be controlled.

This application is based on a prior Japanese Patent Application No. 2007-203225 filed on August 3, 2007. The entire contents of these Japanese Patent Application No. 2007-203225 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

**Claims**

1. An active suspension system comprising:

   a plurality of actuators (15FL~15RR) which are respectively installed between a wheel and a vehicle body and individually produce a control force ($F_{FL}$~$F_{RR}$); and

   a control unit (31) which controls an attitude change of a vehicle (1) by controlling the each control force ($F_{FL}$~$F_{RR}$) of the actuators (15FL~15RR), and

   the control unit (31) setting a virtual control line (E1, E2) that is changed according to a vehicle driving condition and controlling the vehicle attitude in a direction in which an inclination of the vehicle with respect to the virtual control line becomes small.

2. The active suspension system as claimed in claim 1, wherein:

   the control unit (31) sets, as the virtual control line, at least one virtual control line of a first virtual control line (E1) that extends along a front-and-rear direction of the vehicle and a second virtual control line (E2) that extends along a width direction of the vehicle, and controls the vehicle attitude to bring the vehicle attitude closer to the virtual control line.

3. The active suspension system as claimed in claim 1 or 2, wherein:

   the virtual control line (E1, E2) is changed on the basis of an expected vehicle attitude.

4. The active suspension system as claimed in claim 3, wherein:

   the virtual control line (E1, E2) is changed by moving the virtual control line (E1, E2) with a predetermined speed.

5. The active suspension system as claimed in claim 3 or 4, wherein:

   the control unit (31) sets a reference virtual control line (E10, E20) as a reference position of the virtual control line (E1, E2), and

   when judged that the expected vehicle attitude is within a predetermined range, the virtual control line (E1, E2) is set to the position of the reference virtual control line (E10, E20) or the change of the virtual control line (E1, E2) is halted.

6. The active suspension system as claimed in any one of the claims 3 to 5, wherein:

   the control unit (31) sets, as the virtual control line, a first virtual control line (E1) that extends along a front-and-rear direction of the vehicle, and wherein
   the control unit (31) has

   an expected pitch angle calculating section (422) which calculates an expected pitch angle (Vθp) of pitching that would occur to the vehicle (1), as information of the expected vehicle attitude; and
   a first virtual control line changing section (424) which changes an inclination, viewed from a side of the vehicle, of the first virtual control line (E1) to become closer to the expected pitch angle (Vθp) calculated by the expected pitch angle calculating section (422).

7. The active suspension system as claimed in any one of the claims 3 to 6, wherein:

   the control unit (31) sets, as the virtual control line, a second virtual control line (E2) that extends along a width direction of the vehicle, and wherein
   the control unit (31) has

   an expected roll angle calculating section (423) which calculates an expected roll angle (Vθr) of rolling that would occur to the vehicle (1), as information of the expected vehicle attitude; and
   a second virtual control line changing section (424) which changes an inclination, viewed from a front-and-rear direction of the vehicle, of the second virtual control line (E2) to become closer to the expected roll angle (Vθr) calculated by the expected roll angle calculating section (423).

8. A method for suppressing an attitude change of a vehicle (1), wherein the vehicle (1) includes a plurality of actuators (15FL~15RR) respectively installed between a wheel and a vehicle body and individually producing a control force ($F_{FL}$~$F_{RR}$), the method comprising:

setting a virtual control line (E1, E2) that is changed according to a vehicle driving condition; and
controlling the each control force ($F_{FL}$~$F_{RR}$) of the actuators (15FL~15RR) to bring the vehicle attitude closer to the virtual control line (E1, E2).

9. The method for suppressing the attitude change of the vehicle (1) as claimed in claim 8, wherein:

the virtual control line (E1, E2) is at least one virtual control line of a first virtual control line (E1) that extends along a front-and-rear direction of the vehicle and a second virtual control line (E2) that extends along a width direction of the vehicle.

10. The method for suppressing the attitude change of the vehicle (1) as claimed in claim 9, wherein:

the first virtual control line (E1) is changed so that an inclination of the first virtual control line (E1) becomes closer to an expected pitch angle (Vθp) of pitching that would occur to the vehicle (1), and
the second virtual control line (E2) is changed so that an inclination of the second virtual control line (E2) becomes closer to an expected roll angle (Vθr) of rolling that would occur to the vehicle (1).

# FIG.1

# FIG.2

CONTROL PRESSURE P_C →

P_MAX

P_N

P_MIN

0    i_MIN        i_N         i_MAX

COMMAND CURRENT i ⟶

# FIG.3

(+)

UP/DOWN
ACCELERATION
SENSORS DETECTION
VALUES
$Z_{GFR} \sim Z_{GRR}$

(DOWN) ⟵                    0    UP/DOWN    ⟶ (UP)
                                ACCELERATION

(−)

# FIG.4

# FIG.5

# FIG.6

31 CONTROL UNIT

**28FR** LONGITUDINAL ACCELERATION SENSOR — $Z_{GFR}$ → 41 A/D

**28RL** LONGITUDINAL ACCELERATION SENSOR — $Z_{GRL}$ → 41 A/D

**28RR** LONGITUDINAL ACCELERATION SENSOR — $Z_{GRR}$ → 41 A/D

**32** BACK-AND-FORTH ACCELERATION SENSOR → 41 A/D

**33** LATERAL ACCELERATION SENSOR → 41 A/D

**34** STEERING ANGLE SENSOR → 41 A/D

**35** ACCELERATOR OPENING SENSOR → 41 A/D

**36** BRAKE PRESSURE SENSOR → 41 A/D

**37** SHIFT POSITION SENSOR → 41 A/D

**29** CONTROL POINT SETTING DEVICE

42 — 42a INPUT INTERFACE CIRCUIT — 42c PROCESSING UNIT — 42b OUTPUT INTERFACE CIRCUIT — 42d STORAGE DEVICE

$P_{FL}$ → 43FL D/A → 44FL CONTROL VALVE DRIVING CIRCUIT — $i_{FL}$ → 17FL PRESSURE CONTROL VALVE → 15FL HYDRAULIC CYLINDER

$P_{FR}$ → 43FR D/A → 44FR CONTROL VALVE DRIVING CIRCUIT — $i_{FR}$ → 17FR PRESSURE CONTROL VALVE → 15FR HYDRAULIC CYLINDER

$P_{RL}$ → 43RL D/A → 44RL CONTROL VALVE DRIVING CIRCUIT — $i_{RL}$ → 17RL PRESSURE CONTROL VALVE → 15RL HYDRAULIC CYLINDER

$P_{RR}$ → 43RR D/A → 44RR CONTROL VALVE DRIVING CIRCUIT — $i_{RR}$ → 17RR PRESSURE CONTROL VALVE → 15RR HYDRAULIC CYLINDER

EP 2 020 313 A2

# FIG.7

42c

| 421 |
| --- |
| ATTITUDE INFORMATION COMPUTING MEANS |

| 422 |
| --- |
| EXPECTED PITCH ANGLE CALCULATING MEANS |

| 423 |
| --- |
| EXPECTED ROLL ANGLE CALCULATING MEANS |

| 426 |
| --- |
| ATTITUDE CONTROLLING MEANS |

| 424 |
| --- |
| VIRTUAL CONTROL LINE CONTROLLING MEANS |

| 425 |
| --- |
| VIRTUAL CONTROL POINT AUTOMATIC CONTROLLING MEANS |

# FIG.8

E1

E2

1

Ly

Lx

FRONT DIRECTION OF
FRONT-AND-REAR
DIRECTION OF VEHICLE

# FIG.9

# FIG.10

# FIG.11

```
                    ┌─────────┐
                    │  START  │
                    └─────────┘
                         │
                         ▼
        ┌────────────────────────────────┐
 S10 ───│     INPUT EXPECTED             │
        │     PITCH ANGLE V θp           │
        └────────────────────────────────┘
                         │
                         ▼
 S20              ╱──────────────╲
            ╱─────                ─────╲
          ╱      EXPECTED                ╲
         ╱     PITCH ANGLE V θp           ╲      NO
        ◁     IS WITHIN RANGE OF           ▷──────────────┐
         ╲     PREDETERMINED             ╱                │
          ╲      DEAD-BAND?            ╱                  │
            ╲─────              ─────╱                    │
                  ╲──────────╱                            │
                       │ YES                              │
                       ▼                                  ▼
        ┌────────────────────────────┐      ┌────────────────────────────┐
 S30 ───│  VIRTUAL CONTROL LINE      │      │  INCLINATION IS            │── S40
        │  IS SET TO REFERENCE       │      │  CHANGED BY Δp             │
        │  VIRTUAL CONTROL LINE      │      └────────────────────────────┘
        └────────────────────────────┘                   │
                       │◄─────────────────────────────────┘
                       ▼
                  ┌─────────┐
                  │ RETURN  │
                  └─────────┘
```

# FIG.12

```
                    ┌─────────┐
                    │  START  │
                    └─────────┘
                         │
                         ▼
        ┌────────────────────────────────┐
S100 ───│     INPUT EXPECTED             │
        │     ROLL ANGLE V θr            │
        └────────────────────────────────┘
                         │
                         ▼
 S110             ╱──────────────╲
            ╱─────                ─────╲
          ╱      EXPECTED                ╲
         ╱     ROLL ANGLE V θr            ╲      NO
        ◁     IS WITHIN RANGE OF           ▷──────────────┐
         ╲     PREDETERMINED             ╱                │
          ╲      DEAD-BAND?            ╱                  │
            ╲─────              ─────╱                    │
                  ╲──────────╱                            │
                       │ YES                              │
                       ▼                                  ▼
        ┌────────────────────────────┐      ┌────────────────────────────┐
S120 ───│  VIRTUAL CONTROL LINE      │      │  INCLINATION IS            │── S130
        │  IS SET TO REFERENCE       │      │  CHANGED BY Δr             │
        │  VIRTUAL CONTROL LINE      │      └────────────────────────────┘
        └────────────────────────────┘                   │
                       │◄─────────────────────────────────┘
                       ▼
                  ┌─────────┐
                  │ RETURN  │
                  └─────────┘
```

# FIG.13

START

READ SEAT DETECTION SIGNAL AND LOAD DETECTION VALUES WL AND WR — S200

S210 — WL ≧ WS?

— YES

— NO

S260 — WR ≧ WS?

— YES

— NO

S280 — VEHICLE INTERIOR VIRTUAL CONTROL POINT SETTING PROCESS

S270 — RIGHT POSITION OF TRUNK IS SET AS VIRTUAL CONTROL POINT

S220 — WR ≧ WS?

— NO

— YES

S240 — CENTER POSITION OF TRUNK IS SET AS VIRTUAL CONTROL POINT

S250 — LEFT POSITION OF TRUNK IS SET AS VIRTUAL CONTROL POINT

END

# FIG.14

START

CALCULATE $\Delta\theta p$ ~S300

CALCULATE Mp ~S310

CALCULATE $\Delta\theta r$ ~S320

CALCULATE Mr ~S330

CALCULATE U ~S340

CALCULATE CONTROL FORCE ~S350

OUTPUT PRESSURE COMMAND VALUE ~S360

RETURN

# FIG.15

```
        ( START )
            │
            ▼
    ┌─────────────────┐
    │  INITIALIZATION │ ─── S400
    └─────────────────┘
            │
            ▼
    ┌─────────────────┐
    │ SET POSITION OF Za │ ─── S410
    └─────────────────┘
            │
            ▼
  ┌───────────────────────────────────┐
  │ CALCULATE UP/DOWN DISPLACEMENT    │ ─── S420
  │ AMOUNT, PITCH ANGLE AND ROLL ANGLE ETC. │
  └───────────────────────────────────┘
            │
            ▼
  ┌───────────────────────────────────┐
  │ CALCULATE EXPECTED PITCH ANGLE V θp │ ─── S430
  └───────────────────────────────────┘
            │
            ▼
  ┌───────────────────────────────────┐
  │ CALCULATE EXPECTED ROLL ANGLE V θr │ ─── S440
  └───────────────────────────────────┘
            │
            ▼
  ┌───────────────────────────────────┐
  │ CALCULATE DAMPING FORCE TO BRING ATTITUDE │ ─── S450
  │ OF VEHICLE CLOSER TO VIRTUAL CONTROL LINE │
  └───────────────────────────────────┘
            │
            ▼
  ┌───────────────────────────────────┐
  │ OUTPUT PRESSURE COMMAND VALUE     │ ─── S460
  └───────────────────────────────────┘
            │
            ▼       S470
        ◇ CONTROL IS
   NO ◇ TERMINATED ◇
            │
           YES
            ▼
        ( RETURN )
```

# FIG.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7186666 A

- JP 2007203225 A